(19) Europäisches Patentamt
European Patent Office
Office européen des brevets

(11) **EP 1 075 097 B1**

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(51) Int Cl.:
*H04B 10/18* (2006.01)     *H04B 10/158* (2006.01)
*H04L 25/06* (2006.01)

(21) Anmeldenummer: **00440217.8**

(22) Anmeldetag: **21.07.2000**

(54) **Filter zur Bestimmung der Kreuzkorrelation und Empfänger mit einem Filter**

Filtre for the determination of cross-correlation and receiver with a filter

Filtre pour la détermination de la corrélation croisée et récepteur avec un filtre

(84) Benannte Vertragsstaaten:
**AT BE CH CY DE DK ES FI FR GB GR IE IT LI LU MC NL PT SE**

(30) Priorität: **31.07.1999 DE 19936254**

(43) Veröffentlichungstag der Anmeldung:
**07.02.2001 Patentblatt 2001/06**

(73) Patentinhaber: **Alcatel Lucent**
**75008 Paris (FR)**

(72) Erfinder: **Wedding, Berthold Dr.**
**70825 Korntal-Münchingen (DE)**

(74) Vertreter: **Schmidt, Werner Karl et al**
**Alcatel Lucent**
**Intellectual Property & Standards**
**70430 Stuttgart (DE)**

(56) Entgegenhaltungen:
**EP-A- 0 923 204     WO-A-98/43369**

• **BUELOW H: "EQUALIZATION OF BIT DISTORTION INDUCED BY POLARIZATION MODE DISPERSION" CORE AND ATM NETWORKS. NOC, XX, XX, 17. Juni 1997 (1997-06-17), Seiten 65-72, XP001004888**

**Beschreibung**

Stand der Technik

Die Erfindung geht aus von einem Filter zur Bestimmung der Kreuzkorrelation und einem Empfänger mit Korrelationsschaltung Ansprüche.

Aus dem Stand der Technik sind bereits unterschiedliche Empfänger für optische Signale mit Eingangsfiltern sowie Steuerungen für die Parameter der Eingangsfilter bekannt. Beispielsweise werden in dem Artikel "Equalization of Bit Distortion Induced by Polarization Mode Dispersion", H. Bülow, NOC '97, Antwerpen 1997, unterschiedliche Filter sogenannte Equalizer beschrieben, die zur Aufbereitung von optisch übertragenen Signalen eingesetzt werden.
Aus der EP 0 923 204 A2 ist ein optischer Empfänger für den Empfang von digital übertragen Daten bekannt. In diesem Empfänger wird eine transversale Equalizerstruktur vorgeschlagen, die auf einfache Weise auch bei sehr hohen Bitraten arbeitet. Die Einstellungsparameter für das transversale Filter werden durch Auswertung eines Pseudo-Error-Monitors erzeugt. Ziel der vorliegenden Erfindung ist es, einen optischen Empfänger für hohe Bitraten (40 GBit/s) vorzuschlagen, der auf einfache Weise integrierbare Schaltungen enthält und somit kostengünstig herzustellen ist.

Das erfindungsgemäße Filter mit den kennzeichnenden Merkmalen des unabhängigen Anspruches weist eine sehr einfache Struktur auf, um über eine Korrelationsmessung die Daten für ein Eingangsfilter zu erhalten. Die Korrelationsmessung erfolgt dabei in einer Strickleiterstruktur, die ein transversales Wanderwellenfilter darstellt. Die Vorteile dieser Struktur sind die geringen parasitären Kapazitäten, die zu einer guten Anpaßbarkeit auch bei sehr hohen Datenraten führt. Die Ausgangssignale werden nicht wie in bekannten Strukturen an einem Summationspunkt zusammengeführt, was bei hohen Datenraten zu kapazitiven Problemen führt. Mit dieser einfachen Strickleiterstruktur, die zu dem durch ihre einfache Kaskadierbarkeit an die Probleme einer Übertragungsstrecke anpaßbar ist, wird die Korrelationsfunktion des Eingangssignals ermittelt.

Der erfindungsgemäße Empfänger verwendet zur Adaptierung seines Eingangsfilters Parameter, die mit einem Kreuzkorrelator ermittelt werden. Der erfindungsgemäße Kreuzkorrelator wird im erfindungsgemäße Empfänger verwendet, um eine einfache rekursive Struktur aufzubauen. Durch eine von einer Kontrolleinheit durchgeführten Beeinflußung der Kontrollparameter des Equalizers wird ein rekursiver Algorithmus in Gang gesetzt, der zu einer Optimierung der Parameter für den Equalizer führt. Dieses von außen eingeführte Konvergenzkriterium führt zu einem schnelleren oder langsameren Anpassen des adaptiven Equalizers im optischen Empfänger.

In einer spezielleren Ausführungsform wird vorteilhafter Weise ein transversaler Equalizer mit einem transversalen Kreuzkorrelator kombiniert und verschiedene Komponenten synergetisch benutzt. Dadurch erhält man einen extrem einfachen Filter-Korrelator-Aufbau, der es ermöglicht, einen Empfänger mit hoher Integration aufzubauen.

Zeichnungen

Ausführungsbeispiele der Erfindung sind in der Zeichnung dargestellt und in der nachfolgenden Beschreibung näher erläutert.

Es zeigen

Fig. 1   einen transversalen Kreuzkorrelator,

Fig. 2   einen optischen Empfänger mit rekursivem Aufbau und

Fig. 3   einen hoch integrierten optischem Empfänger mit rekursivem Aufbau.

Beschreibung

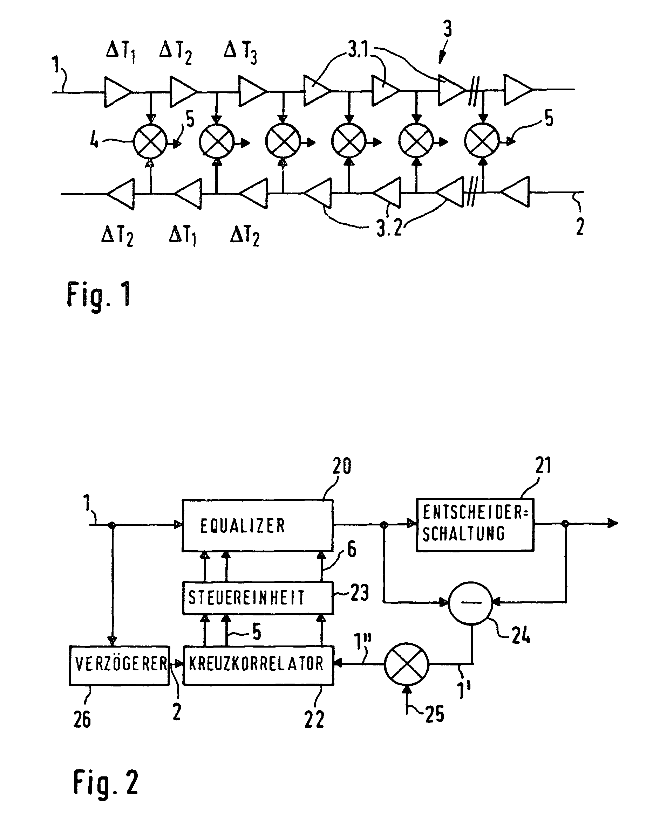

Die erfindungsgemäße Korrelationsmessung erfolgt in einer Filterstruktur wie sie in Fig. 1 beschrieben ist. Das Filter weist zwei Eingänge 1 und 2 auf. Die Eingänge sind jeweils mit einer Kette von Verstärkerzellen 3 verbunden. Die Kette der Verstärkerzellen ist jeweils gegenläufig angeordnet. Das Signal an Eingang 1 durchläuft im Beispiel der Fig. 1 die Kette der Verstärkerzellen 3.1 von links nach rechts. Das Signal an Eingang 2 durchläuft die Kette der Verstärkerzellen 3.2 von rechts nach links. Jeweils zwischen den einzelnen Verstärkerzellen 3 sind Verbindung zu jeweils einem Multiplikator 4 vorhanden. Das Ergebnis der Multiplikation liegt an den jeweils vorhandenen Ausgängen 5 der Multiplikatoren an. Die vorgeschlagene Schaltung ermöglicht es, die Kreuzkorrelation zweier Eingangssignale zu bestimmen. Die Kreuzkorrelation ist bestimmt durch

$$R_{fh}(t) \equiv \int_{-\infty}^{\infty} f(\tau) h(\tau - t) d\tau$$

Sind beide Signale f(t) und h(t) gleich, liegt der Fall der Autokorrelation vor. Zur Messung dieser Funktion wie sie auch in der Veröffentlichung "The Transforms and Applications Handbook", A. Pularitas beschrieben wird, werden zwei Signale an den Eingängen 1 und 2 angelegt. Die Schaltung besteht aus zwei Ketten von Verstärkerzellen 3 mit einem Verstärkungsfaktor von 1 und bestimmten Verzögerungszeiten $\Delta T$. Jeder Multiplizierer 5 erhält zwei Eingangssignale aus den beiden Signalketten und erzeugt ein multipliziertes Signal $f(\tau) \cdot h(\tau - t)$ für unterschiedliche Werte der Zeit t. Die Messung erfolgt dabei in Schritten von $\Delta T = \Delta T_1 + \Delta T_2$ für benachbarte Verstärkerzellen 3. Die Integration bezüglich der Zeit wird über einen Integrator, der in Fig. 1 nicht dargestellt ist, erzeugt. Dabei kann beispielsweise ein Tiefpaßfilter für die Ausgangssignale 5 der Multiplikatoren 4 einsetzt werden. Die unterschiedlichen Verzögerungszeiten $\Delta T_1 + \Delta T_2$ können über unterschiedliche Anzahlen von Verstärkerzellen realisiert werden. Beispielsweise ist in einer einfachen Ausführungsform die Verzögerungszeit $\Delta T_1$ mit einer Verstärkerzelle zu erreichen, während die Verzögerungszeit $\Delta T_2$ die Verwendung zweier Verstärkerzellen voraussetzt. Typischer Weise sind die Verzögerungszeiten $\Delta T$ mit einer Taktzeit T oder einem Bruchteil dieser Taktzeit korreliert.

Fig. 2 zeigt einen erfindungsgemäßen Empfänger mit einer rekursiven Struktur. Ein optisch-elektronisch gewandeltes Eingangssignal 1 liegt an der Schaltung an. Das Signal ist mit dem Eingang eines Eingangsfilters, eines Equalizers 20 verbunden. Das Signal wird über einen Splitter auf einen Verzögerer 26 gegeben, dessen Ausgangssignal 2 am Eingang eines Kreuzkorrelators 22 anliegt. Das Ausgangssignal des Eingangsfilters 20 durchläuft eine Entscheiderschaltung 21. Das Eingangssignal 1 wird einmal vor der Entscheiderschaltung 21 und einmal nach der Entscheiderschaltung 21 abgegriffen und in einem Differenzierer 24 voneinander abgezogen. Als Ergebnis der Differenzbildung bleibt ein Fehlersignal 1' übrig. Dieses Signal 1' wird einer Gewichtungseinheit 25 zugeführt, die eventuell eine Gewichtung mit einem Faktor durchführt. Das gewichtete Fehlersignal 1" liegt am zweiten Eingang des Kreuzkorrelators 22 an. Das Ergebnis der Kreuzkorrelation 5 bildet das Eingangssignal einer Steuereinheit 23, die über Steuersignale 6 die Parameter des Eingangsfilters 20 beeinflußt. In einer einfachen Ausführungsform besteht die Steuereinheit 23 aus einer Serie von RC-Tiefpaßfiltern. Es ist aber auch eine Ausführungsform denkbar, in dem die Steuereinheit aus A/D-Convertern, einem Mikroprozessor sowie D/A-Convertern besteht. Mit dieser Schaltung ist ein "least mean square" (LMS) Algorithmus für eine rekursive Anpassung der Parameter für das Eingangsfilter 20 gegeben. Eine Schaltung zur Realisierung des LMS Algorithmus ist bereits aus "Digital Communications" J. Proakis, Seite 639 bekannt. In dieser Veröffentlichung wird das Prinzip der rekursiven Anpassung von Filterparameter an die Ergebnisse einer elektronischen Auswertung vorgestellt. Die dabei vorgeschlagene Schaltung ist allerdings nicht für hohe Bitraten geeignet.

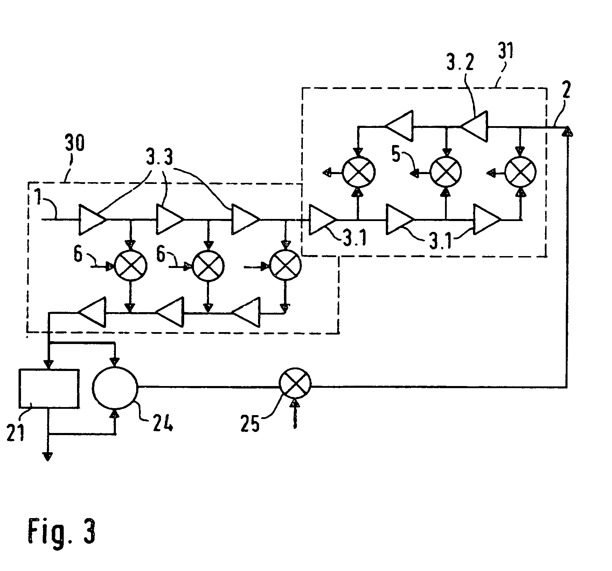

Eine spezielle Realisierung des vorgeschlagen Empfängers wird in Fig. 3 vorgestellt. In dieser Ausführungsform sind das Eingangsfilter sowie der Kreuzkorrelator in einer höchst integrierten Form realisiert. Das Eingangsfilter 30 weist eine Struktur wie sie aus der Patentanmeldung EP 0 923 204 bekannt ist auf. Diese transversale Filterstruktur ist direkt mit dem Kreuzkorrelator 31 verbunden. Durch das Weiterführen der Verstärkerzellenlinie des transversalen Filters 30 dienen die anfänglichen Verstärkerzellen 3.3 des transversalen Filters als Verzögerungseinheit für den Kreuzkorrelator 31. Das Ergebnis der Kreuzkorrelation, das am Ausgang 5 anliegt, wird über eine Steuereinheit als Parametereingang 6 auf das transversale Filter gegeben. Die Steuereinheit selbst ist in dieser Ausführungsform nicht dargestellt. Die Ausführungsform nach Fig. 3 ist eine äußerst einfache sehr gut integrierbare Struktur. Damit ist die Herstellung eines kostengünstigen Empfängers in SiGe-Technologie möglich. Die Schaltung ermöglicht es Signale von Bitraten im Bereich von 10 Gbit/s und 40 Gbit/s zu verarbeiten.

Transversale Filter können nicht nur zur Entzerrung von optischen Signalen eingesetzt werden, sondern dienen auch zum Ausgleich von frequenzabhängigen Dämpfungen eines elektrischen Kabels, z.B. eines Koaxialkabels. Die Filterkoeffizienten können dabei fest eingestellt werden. Schon der Einsatz eines Filters mit vier Filtereingängen konnte ein 10 Gbit/s Signal über 10 m Koaxialkabel positiv beeinflussen und entzerren.

**Patentansprüche**

1. Filter zur Bestimmung der Korrelation von optisch übertragenen Signalen wobei das Filter zwei Eingänge (1, 2) aufweist und aus einer Kette von Verstärkerzellen (3) und Multiplikatoren (4) besteht, **dadurch gekennzeichnet, daß** die Verstärkerzellen (3.1.) des ersten Eingangs (1) und die Verstärkerzellen (3.2.) des zweiten Eingangs (2) gegenläufig mit den Multiplikatoren (4) verbunden sind und Ausgangssignale (5) an den Multiplikatoren (4) abgenommen werden.

2. Filter nach Anspruch 1, **dadurch gekennzeichnet, daß** die Ausgangssignale (5) einen Integrator durchlaufen.

3. Filter nach Anspruch 1, **dadurch gekennzeichnet, daß** die Zeitverzögerungen $\Delta T_1$ und $\Delta T_2$ der Verstärkerzellen (3) für die beiden Eingänge (1, 2) gleich oder unterschiedlich groß sind.

4. Filter nach Anspruch 1, **dadurch gekennzeichnet, daß** die Verstärkerzellen (3) und Multiplikatoren (4) als Kaskade beliebiger Anzahl hintereinander kombinierbar sind.

5. Empfänger mit Korrelationsschaltung für optische Signale bestehend aus einem Eingangsfilter (20), einer Entscheiderschaltung (21), einer Schaltung zum Einbringen eines Konvergenzkriteriums (25) und einem Korrelator (22) zur Messung der Signalkorrelation durch Vergleich mit einem verzögerten Signal, **dadurch gekennzeichnet, daß** zur Bestimmung der Korrelation ein Filter eingebaut ist, wobei das Filter zwei Eingänge (1,2) aufweist und aus einer Kette von Verstärkerzellen (3) und Multiplikatoren (4) besteht und die Verstärkerzellen (3.1.) des ersten Eingangs (1) und die Verstärkerzellen (3.2.) des zweiten Eingangs (2) gegenläufig mit den Multiplikatoren (4) verbunden sind und Ausgangssignale (5) an den Multiplikatoren (4) abgenommen werden.

**6.** Empfänger nach Anspruch 5, **dadurch gekennzeichnet, daß** eine integrierte Schaltung aus transversalem Filter (30) und transversalem Korrelator (31) unter gleichzeitiger Nutzung von Verstärkerzellen (3.3) linear aufgebaut ist.

## Claims

**1.** A filter for the determination of the correlation between optically transmitted signals, wherein the filter exhibits two inputs (1, 2) and consists of a chain of amplifier cells (3) and multipliers (4), **characterized in that** the amplifier cells (3.1) of the first input (1) and the amplifier cells (3.2) of the second input (2) are connected to the multipliers in opposite directions (4) and output signals (5) to the multipliers (4) are received.

**2.** A filter according to Claim 1, **characterized in that** the output signals (5) pass through a system integrator.

**3.** A filter according to Claim 1, **characterized in that** the time delays T1 and T2 of the amplifier cells (3) for the two inputs (1,2) are the same size or different sizes.

**4.** A filter according to Claim 1, **characterized in that** the amplifier cells (3) and multipliers (4) can be combined in tandem as a cascade of any number

**5.** A receiver with a correlation circuit for optical signals consisting of an input filter (20), a decider circuit (21), a circuit for placement of a convergence criterion (25) and a correlator (22) for the measurement of the signal correlation by comparison with a delayed signal, **characterized in that** a filter is installed for the determination of the correlation, wherein the filter exhibits two inputs (1, 2) and consists of a chain of amplifier cells (3) and multipliers (4) and the amplifier cells (3.1) of the first input (1) and the amplifier cells (3.2) of the second Input (2) are oppositely connected to the multipliers (4) and output signals (5) to the multipliers are received.

**6.** A receiver according to Claim 5, **characterized in that** an integrated circuit is built of a transversal filter (30) and a transversal correlator (31) while simultaneously using amplifier cells (3.3)

## Revendications

**1.** Filtre permettant de déterminer la corrélation de signaux transmis optiquement, le filtre présentant deux entrées (1, 2) et comportant une chaîne de cellules d'amplificateur (3) et des multiplicateurs (4), **caractérisé en ce que** les cellules d'amplificateur (3.1.) de la première entrée (1) et les cellules d'amplificateur (3.2.) de la seconde entrée (2) sont reliées en sens opposé aux multiplicateurs (4) et des signaux de sortie (5) sont prélevés sur les multiplicateurs (4).

**2.** Filtre selon la revendication 1, **caractérisé en ce que** les signaux de sortie (5) traversent un intégrateur.

**3.** Filtre selon la revendication 1, **caractérisé en ce que** les retards $\Delta T_1$ et $\Delta T_2$ des cellules d'amplificateur (3) sont égaux ou variables pour les deux entrées (1, 2).

**4.** Filtre selon la revendication 1, **caractérisé en ce que** les cellules d'amplificateur (3) et les multiplicateurs (4) peuvent être combinés les uns derrière les autres sous forme de cascade de n'importe quel nombre.

**5.** Récepteur avec un circuit de corrélation pour des signaux optiques comportant un filtre d'entrée (20), un circuit de décideur (21), un circuit permettant d'introduire un critère de convergence (25) et un corrélateur (22) permettant de mesurer la corrélation de signaux par la comparaison avec un signal retardé, **caractérisé en ce qu'**un filtre est inséré pour déterminer la corrélation, le filtre présentant deux entrées (1,2) et comportant une chaîne de cellules d'amplificateur (3) et des multiplicateurs (4) et les cellules d'amplificateur (3.1.) de la première entrée (1) et les cellules d'amplificateur (3.2.) de la seconde entrée (2) sont reliées en sens opposé aux multiplicateurs (4) et des signaux de sortie (5) sont prélevés sur les multiplicateurs (4).

**6.** Récepteur selon la revendication 5, **caractérisé en ce qu'**un circuit intégré est constitué linéairement d'un filtre transversal (30) et d'un corrélateur transversal (31) par l'utilisation simultanée de cellules d'amplificateur (3.3).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0923204 A2